# EUROPÄISCHE PATENTANMELDUNG

(11) **EP 3 130 942 A1**
(43) Veröffentlichungstag der Anmeldung: **15.02.2017**
(21) Anmeldenummer: 16181489.2
(22) Anmeldetag: 27.07.2016
(51) Int. Cl.: G01S 17/42, G01S 17/89, G01S 17/93, G01S 7/481

(54) **OPTISCHE SENSORVORRICHTUNG FÜR EIN KRAFTFAHRZEUG, KRAFTFAHRZEUG SOWIE VERFAHREN**

(30) Priorität: 28.07.2015 DE 102015112296
(71) Anmelder: Valeo Schalter und Sensoren GmbH, 74321 Bietigheim-Bissingen (DE)
(72) Erfinder: Lin, Lin, 74321 Bietigheim-Bissingen (DE); Simon, Jan, 74321 Bietigheim-Bissingen (DE); Horvath, Peter, 74321 Bietigheim-Bissingen (DE); Schuler, Thomas, 74321 Bietigheim-Bissingen (DE)

(57) **Zusammenfassung**

Die Erfindung betrifft eine optische Sensorvorrichtung (3) für ein Kraftfahrzeug (1) zum Erfassen eines Umgebungsbereiches (4) des Kraftfahrzeugs (1), mit einer Sendeeinrichtung (5) aufweisend eine Lichtquelle (7) zum Aussenden von Licht (8) in den Umgebungsbereich (4) und mit einer Empfangseinrichtung (6) zum Empfangen des in dem Umgebungsbereich (4) reflektierten Lichtes (8), wobei die Sendeeinrichtung (5) eine optische Einrichtung (9) zum sequenziellen Beleuchten des Umgebungsbereiches (4) aufweist, welche dazu ausgelegt ist, zu vorgegebenen Zeitpunkten aus einem Teil (10) des Lichtes (8) der Lichtquelle (7) jeweils einen, in eine dem vorgegebenen Zeitpunkt zugeordnete Senderichtung (12) orientierten Lichtstrahl (11) zu formen und den geformten Lichtstrahl (11) in den Umgebungsbereich (4) auszusenden. Die Erfindung betrifft außerdem ein Kraftfahrzeug (1) sowie ein Verfahren zum Erfassen eines Umgebungsbereiches (4) eines Kraftfahrzeugs (1).

## Beschreibung

Die Erfindung betrifft eine optische Sensorvorrichtung zum Erfassen eines Umgebungsbereiches eines Kraftfahrzeugs, mit einer Sendeeinrichtung aufweisend eine Lichtquelle zum Aussenden von Licht in den Umgebungsbereich und mit einer Empfangseinrichtung zum Empfangen des in dem Umgebungsbereich reflektierten Lichtes. Die Erfindung betrifft außerdem ein Kraftfahrzeug sowie ein Verfahren.

Im vorliegenden Fall richtet sich das Interesse auf eine optische Sensorvorrichtung für ein Kraftfahrzeug, insbesondere einen sogenannten Flash-Lidar-Sensor. Mittels der optischen Sensorvorrichtung kann ein Umgebungsbereich des Kraftfahrzeugs überwacht werden. Dabei können beispielsweise Objekte in dem Umgebungsbereich erfasst werden und Informationen über das erfasste Objekt, beispielsweise ein Abstand des Objektes zu dem Kraftfahrzeug oder eine Geschwindigkeit des Objektes, einem Fahrerassistenzsystem bereitgestellt werden. Eine solche optische Sensorvorrichtung in Form von einem Flash-Lidar-Sensor ist bereits aus dem Stand der Technik bekannt. Bei Lidar-Systemen (Lidar - light detection and ranging) wird der Umgebungsbereich des Kraftfahrzeugs impulsartig ausgeleuchtet und das in dem Umgebungsbereich reflektierte Licht wieder empfangen. Zur zweidimensionalen Erfassung des Umgebungsbereiches kann die optische Sensorvorrichtung als eine Empfangseinrichtung einen Bildsensor mit mehreren Bildzellen beziehungsweise Pixel aufweisen. Zum Erfassen eines Abstandes des Objektes zu dem Kraftfahrzeug, und damit zum dreidimensionalen Erfassen des Umgebungsbereiches, kann außerdem eine Lichtlaufzeit des Lichtes bestimmt werden.

Dabei hängt ein Auflösungsvermögen der Sensorvorrichtung vor allem von der Empfangseinrichtung, insbesondere von den Bildzellen des Bildsensors, ab. Aufgrund der Streuung des Lichtes bei der Reflexion an dem Objekt in dem Umgebungsbereich kann es dabei zu einem unerwünschten Übersprechen zwischen benachbarten Bildzellen kommen. Das daraus resultierende Übersprechrauschen kann zu Fehlern bei der Erfassung des Umgebungsbereiches und damit zu einer unzureichenden Genauigkeit des Flash-Lidar-Sensors führen. Dadurch wird eine Leistungsfähigkeit der optischen Sensorvorrichtung herabgesetzt.

Es ist Aufgabe der vorliegenden Erfindung, eine besonders leistungsfähige und fehlerunanfällige optische Sensorvorrichtung zu realisieren, mittels welcher ein Umgebungsbereich besonders zuverlässig erfasst werden kann.

Diese Aufgabe wird erfindungsgemäß durch eine optische Sensorvorrichtung, ein Kraftfahrzeug sowie ein Verfahren mit den Merkmalen gemäß den unabhängigen Patentansprüchen gelöst.

Eine erfindungsgemäße optische Sensorvorrichtung für ein Kraftfahrzeug dient zum Erfassen eines Umgebungsbereiches des Kraftfahrzeugs. Die optische Sensorvorrichtung umfasst eine Sendeeinrichtung aufweisend eine Lichtquelle zum Aussenden von Licht in den Umgebungsbereich und eine Empfangseinrichtung zum Empfangen des in dem Umgebungsbereich reflektierten Lichtes. Darüber hinaus weist die Sendeeinrichtung eine bezüglich der Lichtquelle ortsfest gelagerte optische Einrichtung zum sequentiellen Beleuchten des Umgebungsbereiches auf, welche dazu ausgelegt ist, zu vorgegebenen Zeitpunkten aus einem Teil des Lichtes der Lichtquelle jeweils einen, in eine dem vorgegebenen Zeitpunkt zugeordnete Senderichtung orientierten Lichtstrahl zu formen und nur den geformten Lichtstrahl in den Umgebungsbereich auszusenden.

Die optische Sensorvorrichtung ist insbesondere als ein Flash-Lidar-Sensor ausgestaltet, welcher zum Erfassen des Umgebungsbereiches des Kraftfahrzeugs durch Aussenden und Empfangen von Licht ausgebildet ist. Erfindungsgemäß ist es nun vorgesehen, dass der Umgebungsbereich des Kraftfahrzeugs schrittweise beziehungsweise sequenziell beleuchtet wird. Dazu weist die Sendeeinrichtung der optischen Sensorvorrichtung die optische Einrichtung auf, welche von dem Licht der Lichtquelle großflächig beleuchtet wird. Die optische Einrichtung ist nun dazu ausgelegt, zu jedem Zeitpunkt einen Teil des Lichtes der Lichtquelle zu dem Lichtstrahl zu formen und nur diesen Lichtstrahl in den Umgebungsbereich auszusenden. Mit anderen Worten bedeutet dies, dass zu jedem Zeitpunkt nur ein dem jeweiligen Zeitpunkt zugeordneter Teil des Lichtes in die zugehörige Senderichtung in den Umgebungsbereich ausgesendet wird. Der übrige Teil des Lichtes der Lichtquelle wird blockiert und nicht in den Umgebungsbereich ausgesendet. Die optische Einrichtung ist dabei ortsfest beziehungsweise starr bezüglich der Lichtquelle. Dies bedeutet insbesondere, dass die optische Einrichtung nicht drehbar gelagert ist. Anders ausgedrückt formt die optische Einrichtung den Lichtstrahl zu jedem Zeitpunkt unter Beibehaltung ihrer Lage zu der Lichtquelle, also insbesondere ohne sich zwischen zwei Zeitpunkten zu drehen.

Der in den Umgebungsbereich reflektierte Lichtstrahl wird dabei von der Empfangseinrichtung empfangen. Der Umgebungsbereich wird also mittels des Lichtstrahls schrittweise beleuchtet, indem zu jedem Zeitpunkt jeweils ein Teil des Lichtes in die zu dem Zeitpunkt korrespondierende Senderichtung orientiert wird.

Im Gegensatz zu Stand der Technik wird also der Umgebungsbereich nicht voll beziehungsweise großflächig ausgeleuchtet, sondern mittels der optischen Einrichtung schrittweise beleuchtet. Dabei wird der in dem Umgebungsbereich reflektierte Lichtstrahl von der Empfangseinrichtung empfangen. Durch das schrittweise Beleuchten kann der Umgebungsbereich besonders genau erfasst werden. Insbesondere kann beispielsweise auf eine ortsauflösende Empfangseinrichtung verzichtet werden, da die Positionsinformationen eines Reflexionsortes, also beispielsweise die Position eines Objektes in dem Umgebungsbereich, an welchem der Lichtstrahl reflektiert wurde, anhand der Senderichtungen des Lichtstrahles bestimmt werden können.

Besonders bevorzugt weist die Empfangseinrichtung eine Anordnung von separaten Empfangselementen auf, wobei jedem Empfangselement eine Senderichtung zum Empfangen des in die zugeordnete Senderichtung orientierten, in dem Umgebungsbereich reflektierten Lichtstrahls zugeordnet ist. Die Empfangseinrichtung ist hier als eine ortsauflösende Empfangseinrichtung ausgestaltet. Eine solche Empfangseineinrichtung kann beispielsweise als ein CCD-Bildsensor mit einzelnen CCD-Sensorelementen als die Empfangselemente ausgestaltet sein (CCD - Charge-Coupled Device). Dabei ist jeder Senderichtung ein Empfangselement, beispielsweise ein CCD-Sensorelement, zugeordnet, sodass jedes Empfangselement nur den Lichtstrahl empfängt, welcher unter der dem Empfangselement zugeordneten Senderichtung ausgesendet und in dem Umgebungsbereich reflektiert wurde. Anders ausgedrückt bedeutet dies, dass im Wesentlichen immer nur ein Empfangselement beleuchtet wird. Somit kann in vorteilhafter Weise ein Übersprechen zwischen den einzelnen Empfangselementen verhindert werden und eine Leistungsfähigkeit der optischen Sensorvorrichtung erhöht werden. Auch kann die Position des Reflexionsortes sowohl anhand der Senderichtungen als auch mittels der ortsauflösenden Empfangseinrichtung besonders genau und zuverlässig erfasst werden.

Vorzugsweise ist die optische Einrichtung zum Formen des in die Senderichtung orientierten Lichtstrahls dazu ausgelegt, zu jedem Zeitpunkt nur den in die jeweilige Senderichtung orientierten Teil des von der Lichtquelle ausgesendeten Lichtes in den Umgebungsbereich zu transmittieren und eine Transmission des übrigen Teils des Lichtes in den Umgebungsbereich zu blockieren. Dies bedeutet, dass die optische Einrichtung zu jedem Zeitpunkt nur für den in die zugehörige Senderichtung weisenden Teil des Lichtes der Lichtquelle transmissiv ist. Anders ausgedrückt bedeutet dies, dass die optische Einrichtung zu jedem Zeitpunkt nur in einem Bereich der optischen Einrichtung durchlässig für das Licht der Lichtquelle ist, auf welchen der in die zugeordnete Senderichtung orientierte Teil des Lichtes fällt. Die optische Einrichtung ist also, beispielsweise mittels einer Steuereinrichtung, bereichsweise transmissiv schaltbar. Der übrige Teil des von der Lichtquelle ausgesendeten Lichtes, also der nicht in die Senderichtung weisende Teil des Lichtes der Lichtquelle, wird mittels der optischen Einrichtung nicht in den Umgebungsbereich transmittiert. Anders ausgedrückt wird die Transmission des übrigen Teils des Lichtes der Lichtquelle von der optischen Einrichtung verhindert beziehungsweise blockiert.

Die Lichtquelle ist hier insbesondere derart angeordnet, dass eine Rückseite der optischen Einrichtung großflächig von der Lichtquelle beleuchtet wird. Eine der Rückseite gegenüberliegende Vorderseite der optischen Einrichtung ist dabei dem Umgebungsbereich des Kraftfahrzeugs zugewandt. Die optische Einrichtung ist dabei zu jedem Zeitpunkt nur in dem jeweiligen Bereich transparent, auf welchen der in die zugeordnete Senderichtung weisende Teil des Lichtes rückseitig auftrifft. Dieser Teil des Lichtes wird von der Rückseite der optischen Einrichtung durch die optische Einrichtung hindurch an die Vorderseite der optischen Einrichtung geführt beziehungsweise transmittiert und an der Vorderseite der optischen Einrichtung als der in die Senderichtung orientierte Lichtstrahl in den Umgebungsbereich ausgesendet.

Gemäß einer Ausführungsform der Erfindung ist die Lichtquelle als eine diffuse Lichtquelle zum Aussenden von diffusem Licht auf die optische Einrichtung ausgestaltet. Die diffuse Lichtquelle kann beispielsweise eine LED, ein Laser, welcher ungebündeltes Laserlicht aussendet, oder eine Laserdiode, welche ungebündeltes Licht aussendet, sein. Die Lichtquelle beleuchtet die optische Einrichtung großflächig. Eine als Laser oder Laserdiode ausgestaltete Lichtquelle sendet in vorteilhafter Weise Licht mit einer hohen Strahlungsleistung und einer besonders hohen Homogenität aus.

Alternativ dazu kann die Lichtquelle zum Aussenden von gebündeltem Licht ausgestaltet sein. Die Sendeeinrichtung weist hier zwischen der Lichtquelle und der optischen Einrichtung einen Diffusor zum Streuen des von der Lichtquelle bereitgestellten gebündelten Lichtes auf die optische Einrichtung auf. Hier ist die Lichtquelle insbesondere als eine Laserdiode oder als ein Laser ausgestaltet, welche oder welcher als das Licht einen gebündelten Laserstrahl aussendet. Zum flächigen Beleuchten der optischen Einrichtung wird der Diffusor, welcher beispielsweise aus einem transparenten Material, beispielsweise Glas, ausgebildet sein kann, zwischen der Lichtquelle und der Rückseite der optischen Einrichtung positioniert. Der auf den Diffusor auftreffende gebündelte Lichtstrahl wird dabei auf die Rückseite der optischen Einrichtung gestreut. Somit kann die optische Einrichtung mit Licht aufweisend eine hohe Strahlungsleistung und eine besonders hohe Homogenität beleuchtet werden und dadurch zu jedem Zeitpunkt ein homogener Lichtstrahl mit einer hohen Strahlungsleistung von der optischen Einrichtung erzeugt werden.

Es kann vorgesehen sein, dass die Lichtquelle zumindest zwei separat ansteuerbare Lichtquellenelemente zum Aussenden von Licht auf die optische Einrichtung aufweist, wobei ein erstes der Lichtquellenelemente einen ersten Ausleuchtbereich zum Beleuchten eines ersten Bereiches der optischen Einrichtung umfasst und ein zweites der Lichtquellenelemente einen zweiten Ausleuchtbereich zum Beleuchten eines zweiten Bereiches der optischen Einrichtung umfasst. Anders ausgedrückt bedeutet dies, dass mittels der separat ansteuerbaren Lichtquellenelemente unterschiedliche Bereiche beziehungsweise Segmente der optischen Einrichtung, insbesondere unterschiedliche Bereiche auf der Rückseite der optischen Einrichtung, beleuchtet werden können. Die Lichtquellenelemente können dabei separat eingeschaltet und ausgeschaltet werden, sodass beispielsweise nur ein bestimmter Bereich der optischen Einrichtung durch ein eingeschaltetes Lichtquellenelement beleuchtet wird.

Vorzugsweise ist eine Steuereinrichtung der Sendeeinrichtung dazu ausgelegt, zu jedem Zeitpunkt nur dasjenige Lichtquellenelement zum Aussenden des Lichtes anzusteuern, dessen Ausleuchtbereich den in die Senderichtung orientierten Teil des Lichtes umfasst. Anders ausgedrückt bedeutet dies, dass nur derjenige Bereich der optischen Einrichtung pro Zeitpunkt beleuchtet wird, welcher zu dem Zeitpunkt transmissiv für das Licht der Lichtquelle ist und den in die zu dem Zeitpunkt korrespondierende Senderichtung orientierten Lichtstrahl formt. Somit kann verhindert werden, dass zu den Zeitpunkten ein Großteil des Lichtes, nämlich der auf die nichttransmissiven Bereiche fallende Teil des Lichtes blockiert wird und damit ein Großteil der Leistung des Lichtes ungenutzt bleibt. Es wird also nur dasjenige Lichtquellenelement von der Steuereinrichtung zum Aussenden des Lichtes angesteuert, also eingeschaltet, dessen Ausleuchtbereich zum aktuellen Zeitpunkt den in die Senderichtung orientierten Teil des Lichtes aufweist. Die optische Sensorvorrichtung ist daher besonders energiesparend gestaltet.

Besonders bevorzugt umfasst die optische Einrichtung eine Anordnung von separat ansteuerbaren mikrooptischen Elementen, wobei jedem der mikrooptischen Elemente jeweils eine Senderichtung zugeordnet ist und das jeweilige mikrooptische Element dazu ausgelegt ist, in einem transmittierenden Zustand den in die zugeordnete Senderichtung orientierten Lichtstrahl zu formen und in den Umgebungsbereich zu transmittieren und in einem blockierenden Zustand die Transmission des Lichtes der Lichtquelle in den Umgebungsbereich zu blockieren. Den mikrooptischen Elementen der optischen Einrichtung, welche zum Formen und zeitgesteuerten Transmittieren des Lichtstrahls ausgebildet sind, ist jeweils eine Senderichtung zugeordnet, wobei die Senderichtung eines mikrooptischen Elementes insbesondere abhängig von einer Position des mikrooptischen Elementes auf der optischen Einrichtung ist. Die mikrooptischen Elemente können separat beziehungsweise getrennt voneinander in den transmittierenden und den blockierenden Zustand versetzt werden. Die mikrooptischen Elemente sind also als schaltbare Elemente ausgestaltet.

In dem transmittierenden Zustand transmittiert das mikrooptische Element den auf das mikrooptische Element fallenden Teil des Lichtes und sendet diesen als in die Senderichtung orientierten Lichtstrahl in den Umgebungsbereich aus. Die mikrooptischen Elemente werden dabei zeitgesteuert in den transmittierenden und den blockierenden Zustand versetzt, sodass zu jedem Zeitpunkt ein anderer Teil des Lichtes, nämlich der Teil, der zum aktuellen Zeitpunkt auf das transmittierende mikrooptische Element fällt, von dem transmittierenden mikrooptischen Element zu dem Lichtstrahl geformt wird und in den Umgebungsbereich ausgesendet wird. Durch das Bereitstellen der separat ansteuerbaren mikrooptischen Elemente kann auf einfache Weise aus dem Licht der Lichtquelle der in die Senderichtung weisende Teil extrahiert werden und somit aus dem Licht der Lichtquelle der Lichtstrahl geformt werden.

Dabei kann es vorgesehen sein, dass jedem mikrooptischen Element ein Empfangselement der Empfangseinrichtung zugeordnet ist, wobei die mikrooptischen Elemente mit einer geometrischen Abmessung gefertigt sind, durch welche eine Strahldivergenz des durch ein mikrooptisches Element geformten Lichtstrahls ein Auflösungsvermögen eines Empfangselementes unterschreitet. Der Erfindung liegt hier die Erkenntnis zugrunde, dass eine Strahldivergenz beziehungsweise ein Strahldurchmesser eines von einem mikrooptischen Element geformten Lichtstrahls von geometrischen Abmessungen des mikrooptischen Elementes abhängt. Die geometrischen Abmessungen werden dabei so gewählt, dass der von einem mikrooptischen Element geformte und in dem Umgebungsbereich reflektierte Lichtstrahl nur auf ein Empfangselement, nämlich auf das Empfangselement mit der zugeordneten Senderichtung, auftrifft. Mit anderen Worten bedeutet dies, dass von dem reflektierten Lichtstrahl nur dasjenige Empfangselement beleuchtet wird, welchem die Senderichtung des reflektierten Lichtstrahls beziehungsweise das mikrooptische Element, welches den Lichtstrahl mit der zugeordneten Senderichtung geformt hat, zugeordnet ist. Es kann also auf einfache Weise durch Vorgeben entsprechender geometrischer Abmessungen der mikrooptischen Elemente ein Übersprechen auf benachbarte Empfangselemente verhindert werden.

Gemäß einer vorteilhaften Ausgestaltung der Erfindung weist die Sendeeinrichtung eine Steuereinrichtung auf, welche dazu ausgelegt ist, zu jedem Zeitpunkt das der jeweiligen Senderichtung zugeordnete mikrooptische Element in den transmittierenden Zustand zu versetzen und die übrigen Sendeelementen in den blockierenden Zustand zu versetzen. Anders ausgedrückt bedeutet dies, dass jeweils nur ein mikrooptisches Element, also das mikrooptische Element mit der dem Zeitpunkt zugeordneten Senderichtung, den in die Senderichtung weisenden Teil transmittiert und die restlichen mikrooptischen Elemente die Transmission des Lichtes in den Umgebungsbereich blockieren.

Eine weitere Ausführungsform der Erfindung sieht vor, dass die optische Einrichtung eine rasterförmige Anordnung der mikrooptischen Elemente aufweist, wobei eine Steuereinrichtung der Sendeeinrichtung zum sequentiellen Beleuchten des Umgebungsbereiches dazu ausgelegt ist, die optischen Elemente der rasterförmigen Anordnung zeilenweise oder spaltenweise nacheinander in den transmittierenden Zustand zu versetzen. Dies bedeutet, dass entlang einer Zeile oder entlang einer Spalte die mikrooptischen Elemente nacheinander in den transmittierenden Zustand versetzt und wieder in den blockierenden Zustand versetzt werden. Bei einem Zeilenende oder einem Spaltenende wird die darauffolgende, beispielsweise darunterliegende, Zeile oder die darauffolgende, beispielsweise danebenliegende, Spalte angesteuert und die mikrooptischen Elemente wiederum nacheinander in den transmittierenden Zustand und wieder in den blockierenden Zustand versetzt, wobei zu jedem Zeitpunkt insbesondere nur jeweils ein mikrooptisches Element den transmittierenden Zustand aufweist. Somit kann ein rasterförmiges Überstreichen des Umgebungsbereiches mittels des Lichtstrahls und damit ein großflächiges Erfassen des Umgebungsbereiches erreicht werden.

Eine Ausführungsform der Erfindung sieht vor, dass die mikrooptischen Elemente als Flüssigkristallelemente ausgestaltet sind, welche in dem transmittierenden Zustand transparent für das Licht der Lichtquelle sind und in dem blockierenden Zustand intransparent für das Licht der Lichtquelle sind. Die mikrooptischen Elemente sind hier als Flüssigkristallelemente beziehungsweise LCs (Liquid Crystal) ausgestaltet, welche beispielsweise durch Anlegen einer elektrischen Spannung, welche beispielsweise von der Steuereinrichtung bereitgestellt wird, auf einfache Weise von einem intransparenten Zustand in einen transparenten Zustand umschaltbar sind.

Eine andere Ausführungsform sieht vor, dass die mikrooptischen Elemente als Mikroklappen ausgestaltet sind, welche in dem transmittierenden Zustand geöffnet sind und in dem blockierenden Zustand geschlossen sind. Gemäß dieser Ausführungsform ist die optische Einrichtung als ein mikroelektromechanisches System (MEMS) in Form von einem sogenannten Microshutter-Array ausgestaltet, bei welchem die einzelnen Mikroklappen, die Microshutter, separat ansteuerbar sind. In einem geschlossenen Zustand der Mikroklappe wird ein Durchdringen des auf die geschlossene Mikroklappe fallenden Teils des Lichtes verhindert und in einem geöffneten Zustand der Mikroklappe wird das Durchdringen des auf die geöffnete Mikroklappe fallenden Teils des Lichtes zugelassen.

Die Erfindung betrifft außerdem ein Kraftfahrzeug mit einer erfindungsgemäßen optischen Sensorvorrichtung. Die optische Sensorvorrichtung dient zum Erfassen eines Umgebungsbereiches des Kraftfahrzeugs. Das Kraftfahrzeug ist insbesondere als ein Personenkraftwagen ausgestaltet.

Die Erfindung betrifft außerdem ein Verfahren zum Erfassen eines Umgebungsbereiches eines Kraftfahrzeugs, bei welchem von einer Sendeeinrichtung aufweisend eine Lichtquelle Licht in den Umgebungsbereich ausgesendet wird und von einer Empfangseinrichtung das in den Umgebungsbereich reflektierte Licht empfangen wird. Darüber hinaus wird mittels einer optischen Einrichtung zum sequentiellen Beleuchten des Umgebungsbereiches zu vorgegebenen Zeitpunkten aus einem Teil des Lichtes der Lichtquelle jeweils ein in eine dem vorgegebenen Zeitpunkt zugeordnete Senderichtung orientierter Lichtstrahl geformt und nur der geformte Lichtstrahl in den Umgebungsbereich ausgesendet.

Die mit Bezug auf die erfindungsgemäße optische Sensorvorrichtung vorgestellten bevorzugten Ausführungsformen und deren Vorteile gelten entsprechend für das erfindungsgemäße Kraftfahrzeug sowie für das erfindungsgemäße Verfahren.

Mit Angaben "oben", "unten", "vorne", "hinten", "horizontal", "vertikal", "innen", "außen", "seitlich", "Vorderseite" (14), "Rückseite" (13), "Senderichtung" (7), etc. sind bei bestimmungsgemäßem Gebrauch und bestimmungsgemäßem Anordnen der optischen Sensorvorrichtung am Kraftfahrzeug und bei einem vor dem Kraftfahrzeug stehenden und in Richtung des Kraftfahrzeugs blickenden Beobachter gegebene Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen sowie nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Im Folgenden wird die Erfindung nun anhand eines bevorzugten Ausführungsbeispiels wie auch unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs;
- Fig. 2: eine schematische Darstellung einer Ausführungsform einer Sendeeinrichtung einer erfindungsgemäßen optischen Sensorvorrichtung;
- Fig. 3: eine schematische Darstellung einer weiteren Ausführungsform einer Sendeeinrichtung einer erfindungsgemäßen Sensorvorrichtung; und
- Fig. 4: eine schematische Darstellung einer weiteren Ausführungsform einer Sendeeinrichtung einer erfindungsgemäßen optischen Sensorvorrichtung.

In den Figuren sind gleiche sowie funktionsgleiche Elemente mit den gleichen Bezugszeichen versehen.

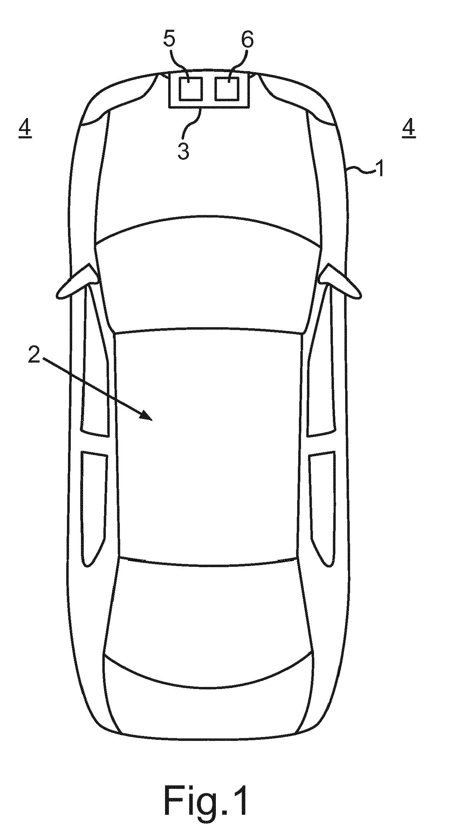

Fig. 1 zeigt ein Kraftfahrzeug 1 gemäß einer Ausführungsform der vorliegenden Erfindung. Das Kraftfahrzeug 1 ist im vorliegenden Fall als ein Personenkraftwagen ausgebildet. Das Kraftfahrzeug 1 weist ein Fahrerassistenzsystem 2 auf, welches beispielsweise in Form von einem Parkassistenzsystem ausgestaltet sein kann. Außerdem weist das Kraftfahrzeug 1 eine optische Sensorvorrichtung 3 auf, welche zum Erfassen eines Umgebungsbereiches 4 des Kraftfahrzeugs 1 ausgebildet ist. Die optische Sensorvorrichtung 3 ist insbesondere als Flash-Lidar-Sensor ausgestaltet, welcher den Umgebungsbereich 4 beleuchtet und das in dem Umgebungsbereich 4 reflektierte Licht wieder empfängt. Dazu weist die optische Sensorvorrichtung 3 eine Sendeeinrichtung 5 zum Aussenden von Licht sowie eine Empfangseinrichtung 6 zum Erfassen des reflektieren Lichtes auf. Informationen über den Umgebungsbereich 4 des Kraftfahrzeugs 1, beispielsweise ein Abstand eines Objektes in dem Umgebungsbereich 4 und/oder eine Geschwindigkeit des Objektes und/oder geometrische Abmessungen des Objektes, können dem Fahrerassistenzsystem 2 bereitgestellt werden.

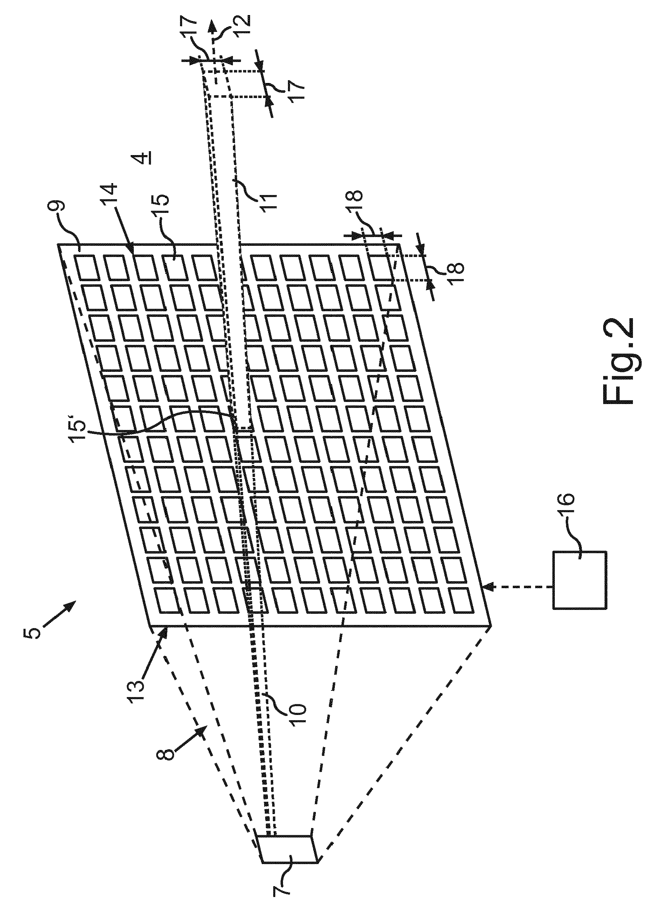

In Fig. 2 ist eine Ausführungsform der Sendeeinrichtung 5 der optischen Sensorvorrichtung 3 gezeigt. Die Sendeeinrichtung 5 weist eine Lichtquelle 7 auf, welche zum Aussenden von Licht 8 auf eine optische Einrichtung 9 der Sendeeinrichtung 5 ausgestaltet ist. Die Lichtquelle 7 ist hier zum Aussenden von diffusem Licht ausgestaltet und kann beispielsweise als eine LED, als ein Laser zum Aussenden von ungebündeltem Licht oder als eine Laserdiode zum Aussenden von ungebündeltem Licht ausgeführt sein. Die optische Einrichtung 9 ist dabei unbeweglich, insbesondere nicht drehbar, gegenüber der Lichtquelle 7 gelagert und weist eine Rückseite 13 auf, welche von dem Licht 8 der Lichtquelle 7 großflächig ausgeleuchtet wird. Eine der Rückseite 13 gegenüberliegende Vorderseite 14 der optischen Einrichtung 9 ist dem Umgebungsbereich 4 des Kraftfahrzeugs 1 zugewandt.

Die optische Einrichtung 9 dient zum sequentiellen Beleuchten des Umgebungsbereiches 4. Anders ausgedrückt, ist die optische Einrichtung 9 dazu ausgelegt, den Umgebungsbereich 4 schrittweise zu beleuchten, wobei zu vorgegebenen Zeitpunkten jeweils eine Stelle in dem Umgebungsbereich beleuchtet wird. Dabei wird zu jedem Zeitpunkt ein Lichtstrahl 11 in eine zu dem Zeitpunkt korrespondierende Senderichtung 12 ausgesendet. Dazu formt die optische Einrichtung 9 einen Teil 10 des von der Lichtquelle 7 ausgesendeten Lichtes 8 zu dem Lichtstrahl 11 und sendet nur den geformten Lichtstrahl 11 in den Umgebungsbereich 4 aus.

Das Licht 8 wird hier von der Lichtquelle 7 auf die Rückseite 13 der optischen Einrichtung 9 ausgesendet. Die optische Einrichtung 9 ist nun dazu ausgelegt, zu einem jeweiligen Zeitpunkt nur denjenigen Teil 10 des Lichtes 8, welcher in die dem jeweiligen Zeitpunkt zugeordnete Senderichtung 12 orientiert ist, zu der Vorderseite 14 der optischen Einrichtung 9 zu transmittieren und als den Lichtstrahl 11 in den Umgebungsbereich 4 auszusenden. Damit wird der Umgebungsbereich 4 sequenziell beziehungsweise schrittweise beleuchtet.

Um nur den in die Senderichtung 12 orientierten Teil 10 des Lichtes 8 zu dem Lichtstrahl 11 zu formen und in den Umgebungsbereich 4 zu transmittieren, kann die optische Einrichtung 9 eine Anordnung von mikrooptischen Elementen 15, 15' aufweisen, welche von einer Steuereinrichtung 16 der Sendeeinrichtung 5 separat ansteuerbar sind. Die mikrooptischen Elemente 15, 15' sind hier rasterförmig angeordnet und bilden ein sogenanntes Array aus mikrooptischen Elementen 15, 15'. Die Steuereinrichtung 14 kann dabei dazu ausgelegt sein, die mikrooptischen Elemente 15, 15' zeitgesteuert in einen transmittierenden Zustand und in einen blockierenden Zustand zu versetzen. Hier ist nur das mikrooptische Element 15' in dem transmittierenden Zustand und damit transmissiv für das Licht 8 der Lichtquelle 7. Die übrigen mikrooptischen Elemente 15, von welchen hier der Übersichtlichkeit halber nur eines beschriftet ist, sind in dem blockierenden Zustand und blockieren die Transmission des Lichtes 8 der Lichtquelle 7 in den Umgebungsbereich 4. Das mikrooptische Element 15' in dem transmittierenden Zustand ist also dazu ausgelegt, den in die Senderichtung 12 weisenden Teil 10 des Lichtes 8, also den rückseitig auf das mikrooptische Element 15' fallenden Teil 10 des Lichtes 8, zu dem Lichtstrahl 11 zu formen und entlang der Senderichtung 12 in den Umgebungsbereich 4 zu transmittieren. Die mikrooptischen Elemente 15 in dem blockierenden Zustand sind dazu ausgelegt, die Transmission des Lichtes 8 der Lichtquelle 7 in den Umgebungsbereich 4 zu verhindern beziehungsweise zu blockieren.

Die mikrooptischen Elemente 15, 15' können beispielsweise als Flüssigkristallelemente beziehungsweise LCs ausgestaltet sein, welche in dem transmittierenden Zustand transparent für das Licht 8 der Lichtquelle 7 sind und in dem nicht transmittierenden Zustand intransparent für das Licht 8 der Lichtquelle 7 sind. Zum Überführen der mikrooptischen Elemente 15, 15' in den jeweiligen Zustand kann beispielsweise von der Steuereinrichtung 16 eine elektrische Spannung an das jeweilige als Flüssigkristallelement ausgestaltete mikrooptische Element 15, 15' angelegt werden. Dadurch ist die optische Einrichtung 9 als eine elektrooptische Einrichtung ausgebildet.

Die mikrooptischen Elemente 15, 15' können aber auch als Mikroklappen beziehungsweise Microshutter ausgestaltet sein, wodurch die optische Einrichtung 9 als ein mikroelektromechanisches System in Form von einem Microshutter-Array ausgebildet ist. Die Mikroklappen können dabei separat geöffnet und geschlossen werden, wobei die Mikroklappen in dem transmittierenden Zustand geöffnet sind und in dem nicht transmittierenden Zustand geschlossen sind. Zum Öffnen oder Schließen der Mikroklappen kann von der Steuereinrichtung 16 eine entsprechende elektrische Spannung an die jeweiligen Mikroklappen angelegt werden.

Die Steuereinrichtung 16 ist insbesondere dazu ausgelegt, pro Zeitpunkt immer nur ein mikrooptisches Element 15' in den transmittierenden Zustand zu versetzen und die anderen mikrooptischen Elemente 15 in den blockierenden Zustand zu versetzen. Zum rasterartigen Überstreichen des Umgebungsbereiches 4 mit dem Lichtstrahl 11 kann die Steuereinrichtung 16 die mikrooptischen Elemente 15, 15' beispielsweise zeilenweise oder spaltenweise nacheinander in den transmittierenden Zustand und zurück in den blockierenden Zustand versetzen. Somit wird zu jedem Zeitpunkt ein anderer Teil 10 des Lichtes 8 der Lichtquelle 7 als der Lichtstrahl 11 geformt und in den Umgebungsbereich 4 ausgesendet.

Die hier nicht dargestellte Empfangseinrichtung 6 dient zum Empfangen des in dem Umgebungsbereich 4 reflektierten Lichtstrahls 11. Dabei weist die Empfangseinrichtung eine Anordnung von Empfangselementen auf, wobei jeweils ein Empfangselement einem mikrooptischen Element 15, 15' zugeordnet ist. Damit ist jedem Empfangselement eine Senderichtung 12 zugeordnet. Dies bedeutet, dass von jedem Empfangselement im Wesentlichen nur derjenige reflektierte Lichtstrahl 11 empfangen wird, welcher unter der dem Empfangselement zugeordneten Senderichtung 12 in den Umgebungsbereich 4 ausgesendet wurde. Dies entspricht nur demjenigen reflektierten Lichtstrahl 11, welcher von dem zugeordneten mikrooptischen Element 15, 15' geformt und in den Umgebungsbereich 4 ausgesendet wurde. Durch das Formen des Lichtstrahls 11 kann beispielsweise ein Übersprechen zwischen benachbarten Empfangselementen der Empfangseinrichtung 6 verhindert werden. Die mikrooptischen Elemente 15, 15' weisen dabei geometrische Abmessungen 18 auf, wodurch der Lichtstrahl 11 mit einem bestimmten Strahldurchmesser 17 geformt wird und dadurch ein Auflösungsvermögen eines einzelnen Empfangselementes unterschritten wird. Anders ausgedrückt bedeutet dies, dass der reflektierte Lichtstrahl 11 nur auf das, seiner Sendrichtung 12 zugeordnete Empfangselement auftrifft.

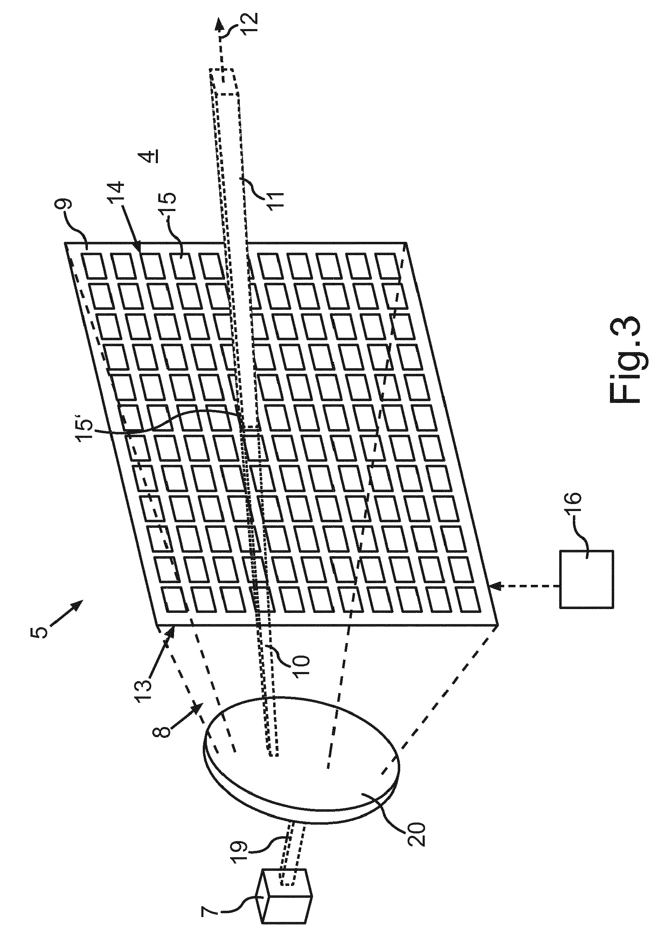

Fig. 3 zeigt eine weitere Ausführungsform der Sendeeinrichtung 5 der optischen Sensorvorrichtung 3. Hier weist die Sendeeinrichtung 5 eine Lichtquelle 7 auf, welche gebündeltes Licht 19 aussendet. Die Lichtquelle 7 kann beispielsweise als eine Laserdiode oder als ein Laser ausgestaltet sein, welche oder welcher das gebündelte Licht 19 aussendet. Zum Streuen des gebündelten Lichtes 19 auf die optische Einrichtung 9 weist die Sendeeinrichtung 5 einen Diffusor 20 auf, welcher zwischen der Lichtquelle 7 und der optischen Einrichtung 9 positioniert ist. Der Diffusor 20 weitet den gebündelten Lichtstrahl 19 auf und beleuchtet dadurch die Rückseite 13 der optischen Einrichtung 9 großflächig.

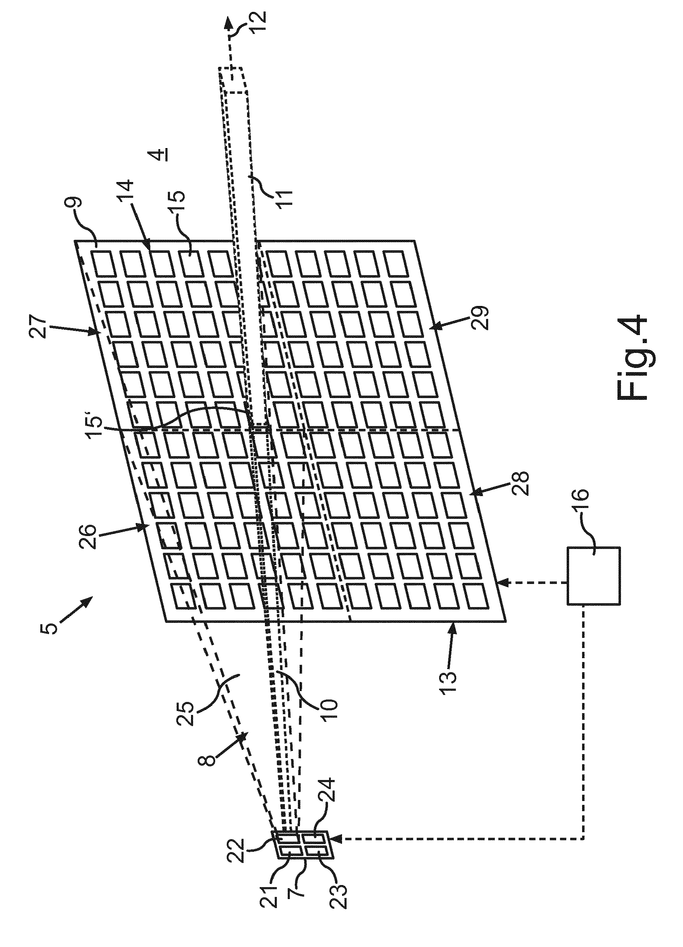

Fig. 4 zeigt eine weitere Ausführungsform der Sendeeinrichtung 5 der optischen Sensorvorrichtung 3. Hier weist die Lichtquelle 7 mehrere Lichtquellenelemente 21, 22, 23, 24 auf, wobei jedes der Lichtquellenelemente 21, 22, 23, 24 separat ansteuerbar ist. Jedes der Lichtquellenelemente 21, 22, 23, 24 weist einen Ausleuchtbereich aus, innerhalb welchem das Lichtquellenelement 21, 22, 23, 24 Licht 8 auf die optische Einrichtung 9 aussendet. Der Übersichtlichkeit halber ist hier nur der Ausleuchtbereich 25 des Lichtquellenelements 22 gezeigt. Dabei beleuchtet jedes der Lichtquellenelemente 21, 22, 23, 24 einen Bereich 26, 27, 28, 29 der optischen Einrichtung 9. Der hier nicht dargestellte Ausleuchtbereich des Lichtquellenelements 21 beleuchtet dabei den Bereich 26 der optischen Einrichtung 9, der Ausleuchtbereich 25 des Lichtquellenelements 22 beleuchtet den Bereich 27 der optischen Einrichtung 9, der hier nicht dargestellte Ausleuchtbereich des Lichtquellenelements 23 beleuchtet den Bereich 28 der optischen Einrichtung 9 und der hier nicht dargestellte Ausleuchtbereich des Lichtquellenelements 24 beleuchtet den Bereich 29 der optischen Einrichtung 9.

Die Lichtquellenelemente 21, 22, 23, 24 der Lichtquelle 7 können separat, beispielsweise von der Steuereinrichtung 16, eingeschaltet und ausgeschaltet werden. In dem eingeschalteten Zustand sendet das entsprechende Lichtquellenelement 21, 22, 23, 24 das Licht 8 aus, in dem ausgeschalteten Zustand sendet das entsprechende Lichtquellenelement 21, 22, 23, 24 kein Licht aus. Dabei wird zu jedem Zeitpunkt nur dasjenige Lichtquellenelement 21, 22, 23, 24 eingeschaltet, welches den Bereich 26, 27, 28, 29 mit dem zum dem Zeitpunkt transmittierenden mikrooptischen Element 15' aufweist. Mit anderen Worten bedeutet dies, dass nur das Lichtquellenelement 21, 22, 23, 24 eingeschaltet wird, dessen Ausleuchtbereich 25 den in die Senderichtung 12 orientierten Teil 10 des Lichtes 8 aufweist. Hier wird also nur das Lichtquellenelement 22 eingeschaltet, sodass der Ausleuchtbereich 25 des Lichtquellenelements 22 den Bereich 27 der optischen Einrichtung 9 beleuchtet. Somit kann verhindert werden, dass Bereiche 26, 28, 29 beleuchtet werden, bei welchen eine Transmission des Lichtes 8 zu dem jeweiligen Zeitpunkt sowieso blockiert wird.

## Patentansprüche

1. Optische Sensorvorrichtung (3) für ein Kraftfahrzeug (1) zum Erfassen eines Umgebungsbereiches (4) des Kraftfahrzeugs (1), mit einer Sendeeinrichtung (5) aufweisend eine Lichtquelle (7) zum Aussenden von Licht (8) in den Umgebungsbereich (4) und mit einer Empfangseinrichtung (6) zum Empfangen des in dem Umgebungsbereich (4) reflektierten Lichtes (8),
**dadurch gekennzeichnet, dass**
die Sendeeinrichtung (5) eine bezüglich der Lichtquelle (7) ortsfest gelagerte optische Einrichtung (9) zum sequenziellen Beleuchten des Umgebungsbereiches (4) aufweist, welche dazu ausgelegt ist, zu vorgegebenen Zeitpunkten aus einem Teil (10) des Lichtes (8) der Lichtquelle (7) jeweils einen, in eine dem vorgegebenen Zeitpunkt zugeordnete Senderichtung (12) orientierten Lichtstrahl (11) zu formen und den geformten Lichtstrahl (11) in den Umgebungsbereich (4) auszusenden.

2. Optische Sensorvorrichtung (3) nach Anspruch 1,
**dadurch gekennzeichnet, dass**
die Empfangseinrichtung (6) eine Anordnung von separaten Empfangselementen aufweist, wobei jedem Empfangselement eine Senderichtung (12) zum Empfangen des in die zugeordnete Senderichtung (12) orientierten, in dem Umgebungsbereich (4) reflektierten Lichtstrahls (11) zugeordnet ist.

3. Optische Sensorvorrichtung (3) nach Anspruch 1 oder 2,
**dadurch gekennzeichnet, dass**
die optische Einrichtung (9) zum Formen des in die Senderichtung (12) orientierten Lichtstrahls (11) dazu ausgelegt ist, zu jedem Zeitpunkt nur den in die jeweilige Senderichtung (12) orientierten Teil (10) des von der Lichtquelle (7) ausgesendeten Lichtes (8) in den Umgebungsbereich (4) zu transmittieren und eine Transmission des übrigen Teils des Lichtes (8) in den Umgebungsbereich (4) zu blockieren.

4. Optische Sensorvorrichtung (3) nach einem der Ansprüche 1 bis 3,
**dadurch gekennzeichnet, dass**
die Lichtquelle (7) als eine diffuse Lichtquelle zum Aussenden von diffusem Licht auf die optische Einrichtung (9) ausgestaltet ist.

5. Optische Sensorvorrichtung (3) nach einem der Ansprüche 1 bis 3,
**dadurch gekennzeichnet, dass**
die Lichtquelle (7) zum Aussenden von gebündeltem Licht (19) ausgestaltet ist und die Sendeeinrichtung (5) zwischen der Lichtquelle (7) und der optischen Einrichtung (9) einen Diffusor (20) zum Streuen des von der Lichtquelle (7) bereitgestellten gebündelten Lichtes (19) auf die optische Einrichtung (9) aufweist.

6. Optische Sensorvorrichtung (3) nach einem der vorhergehenden Ansprüche,
**dadurch gekennzeichnet, dass**
die Lichtquelle (7) zumindest zwei separat ansteuerbare Lichtquellenelemente (21, 22, 23, 24) zum Aussenden von Licht auf die optische Einrichtung (9) aufweist, wobei ein erstes der Lichtquellenelemente (21) einen ersten Ausleuchtbereich zum Beleuchten eines ersten Bereiches (26) der optischen Einrichtung (9) umfasst und ein zweites der Lichtquellenelemente (22) einen zweiten Ausleuchtbereich (25) zum Beleuchten eines zweiten Bereiches (27) der optischen Einrichtung (9) umfasst.

7. Optische Sensorvorrichtung (3) nach Anspruch 6,
**dadurch gekennzeichnet, dass**
eine Steuereinrichtung (16) der Sendeeinrichtung (5) dazu ausgelegt ist, zu jedem Zeitpunkt nur dasjenige Lichtquellenelement (22) zum Aussenden des Lichtes anzusteuern, dessen Ausleuchtbereich (25) den in die Senderichtung (12) orientierten Teil (10) des Lichtes (8) umfasst.

8. Optische Sensorvorrichtung (3) nach einem der vorhergehenden Ansprüche,
**dadurch gekennzeichnet, dass**
die optische Einrichtung (3) eine Anordnung von separat ansteuerbaren mikrooptischen Elementen (15, 15') umfasst, wobei jedem der mikrooptischen Elemente (15, 15') jeweils eine Senderichtung (12) zugeordnet ist und das jeweilige mikrooptische Element (15, 15') dazu ausgelegt ist, in einem transmittierenden Zustand den in die zugeordnete Senderichtung (12) orientierten Lichtstrahl (11) zu formen und in den Umgebungsbereich (4) zu transmittieren, und in einem blockierenden Zustand die Transmission des Lichtes (8) der Lichtquelle (7) in den Umgebungsbereich (4) zu blockieren.

9. Optische Sensorvorrichtung (3) nach Anspruch 8,
**dadurch gekennzeichnet, dass**
jedem mikrooptischen Element (15, 15') ein Empfangselement der Empfangseinrichtung (6) zugeordnet ist, wobei die mikrooptischen Elemente (15, 15') mit einer geometrischen Abmessung (18) gefertigt sind, durch welche ein Strahldurchmesser (17) des durch ein mikrooptisches Element (15') geformten Lichtstrahls (11) ein Auflösungsvermögen eines Empfangselementes unterschreitet.

10. Optische Sensorvorrichtung (3) nach Anspruch 8 oder 9,
**dadurch gekennzeichnet, dass**
die Sendeeinrichtung (5) eine Steuereinrichtung (16) aufweist, welche dazu ausgelegt ist, zu jedem Zeitpunkt das der jeweiligen Senderichtung (12) zugeordnete mikrooptische Element (15') in den transmittierenden Zustand zu versetzen und die übrigen Sendeelemente (15) in den blockierenden Zustand zu versetzen.

11. Optische Sensorvorrichtung (3) nach einem der Ansprüche 8 bis 10,
**dadurch gekennzeichnet, dass**
die optische Einrichtung (9) eine rasterförmig Anordnung der mikrooptischen Elemente (15, 15') aufweist und eine Steuereinrichtung (16) der Sendeeinrichtung (5) zum sequenziellen Beleuchten des Umgebungsbereiches (4) dazu ausgelegt ist, die mikrooptischen Elemente (15, 15') der rasterförmigen Anordnung zeilenweise oder spaltenweise nacheinander in den transmittierenden Zustand zu versetzen.

12. Optische Sensorvorrichtung (3) nach einem der Ansprüche 8 bis 11,
**dadurch gekennzeichnet, dass**
die mikrooptischen Elemente (15, 15') als Flüssigkristallelemente ausgestaltet sind, welche in dem transmittierenden Zustand transparent für das Licht (8) der Lichtquelle (7) sind und in dem blockierenden Zustand intransparent für das Licht (8) der Lichtquelle (7) sind.

13. Optische Sensorvorrichtung (3) nach einem der Ansprüche 8 bis 11,
**dadurch gekennzeichnet, dass**
die mikrooptischen Elemente (15, 15') als Mikroklappen ausgestaltet sind, welche in dem transmittierenden Zustand geöffnet sind in dem blockierenden Zustand geschlossen sind.

14. Kraftfahrzeug (1) mit einer optischen Sensorvorrichtung (3) nach einem der vorhergehenden Ansprüche.

15. Verfahren zum Erfassen eines Umgebungsbereiches (4) eines Kraftfahrzeugs (1), bei welchem von einer Sendeeinrichtung (5) aufweisend eine Lichtquelle (7) Licht (8) in den Umgebungsbereich (4) ausgesendet wird und von einer Empfangseinrichtung (6) das in dem Umgebungsbereich (4) reflektierte Licht empfangen wird,
**dadurch gekennzeichnet, dass**
mittels einer bezüglich der Lichtquelle (7) ortsfest gelagerten optische Einrichtung (9) zum sequenziellen Beleuchten des Umgebungsbereiches (4) zu vorgegebenen Zeitpunkten aus einem Teil (10) des Lichtes (8) der Lichtquelle (7) jeweils ein in eine dem vorgegebenen Zeitpunkt zugeordnete Senderichtung (12) orientierter Lichtstrahl (11) geformt wird und der geformte Lichtstrahl (11) in den Umgebungsbereich (4) ausgesendet wird.
